# EUROPÄISCHE PATENTANMELDUNG

(11) **EP 2 680 529 A1**
(43) Veröffentlichungstag der Anmeldung: **01.01.2014**
(21) Anmeldenummer: 13171683.9
(22) Anmeldetag: 12.06.2013
(51) Int. Cl.: H04L 29/06, G06F 9/445

(54) **Netzwerkeinrichtung und Verfahren zum Betreiben einer Netzwerkeinrichtung für ein Automatisierungsnetzwerk**

(30) Priorität: 29.06.2012 DE 102012211306; 16.07.2012 DE 102012212412
(71) Anmelder: Siemens Aktiengesellschaft, 80333 München (DE)
(72) Erfinder: Fischer, Kai, 85598 Baldham (DE); Gessner, Jürgen, 85661 Forstinning (DE); Schattleitner, Angela, 83104 Tuntenhausen (DE)

(57) **Zusammenfassung**

Es werden eine Netzwerkeinrichtung und ein Verfahren zum Betreiben einer Netzwerkeinrichtung für ein Automatisierungsnetzwerk vorgeschlagen. Die Netzwerkeinrichtung ist mit Hilfe einer Echtzeitanwendung zur Bereitstellung einer Funktion der Netzwerkeinrichtung eingerichtet, wobei die Echtzeitanwendung mindestens einen vorbestimmten aktualisierbaren Parameter hat. Die Netzwerkeinrichtung weist eine Speichereinrichtung zum Speichern von Aktualisierungsdaten für den aktualisierbaren Parameter in einem Aktualisierungsspeicherbereich und zum Speichern von Anwendungsdaten für die Echtzeitanwendung in einem Anwendungsspeicherbereich auf, wobei der Aktualisierungsspeicherbereich und der Anwendungsspeicherbereich voneinander getrennt sind. Die Netzwerkeinrichtung ist derart eingerichtet, dass nach einem Schreiben von Aktualisierungsdaten in den Aktualisierungsspeicherbereich zu einem vorgegebenen Aktualisierungszeitpunkt ein Ändern einer auf den Anwendungsspeicherbereich verweisenden ersten Speicheradresse in eine auf den die Aktualisierungsdaten speichernden Aktualisierungsspeicherbereich verweisende zweite Speicheradresse erfolgt, wobei das Ändern innerhalb eines im Voraus festgelegten Aktualisierungszeitschlitzes deterministisch zur Laufzeit der Echtzeitanwendung erfolgt.

Ferner werden ein Automatisierungsnetzwerk mit mehreren solcher Netzwerkeinrichtungen, ein Computerprogrammprodukt und ein Datenträger vorgeschlagen.

## Beschreibung

Die vorliegende Erfindung betrifft eine Netzwerkeinrichtung und ein Verfahren zum Betreiben einer Netzwerkeinrichtung für ein Automatisierungsnetzwerk.

Intelligente Feldgeräte und Controller in einem Automatisierungsnetzwerk kommunizieren sowohl deterministisch über synchrone und asynchrone Echtzeitkommunikation als auch mittels nicht-deterministischer Methoden, zum Beispiel unter Verwendung der OPC-Protokolle(OPC; Object Linking and Embedding for Process Control). Das Steuerprogramm derartiger Feldgeräte und Controller wird zumeist mit einer genormten Programmiersprache entworfen und kompiliert, beispielsweise nach der IEC-Norm 61131. Die Interaktion der Feldgeräte und der Steuerung in einem Controller wird beispielsweise mit einem Engineering Tool wie Step7 und sowie mit den jeweiligen Gerätebeschreibungen entworfen. Dabei werden deterministische Echtzeitanwendungen exakt getaktet geplant und umgesetzt, um danach auf das Feldgerät geladen zu werden. Eine nachträgliche Änderung dieser Echtzeitanwendung oder des betreffenden Anwendungs-Images für ein Feldgerät oder einen Controller, zum Beispiel über die OPC-Gerätekommunikation, ist nicht möglich.

Um die Änderung von Konfigurationen oder ein Software-Lifecyclemanagement von Echtzeitanwendungen in Feldgeräten und Controllern zu ermöglichen, ist herkömmlicherweise ein Abschalten der in den Geräten laufenden Echtzeitanwendung oder des Feldgeräts selbst oder ein Umbau der betreffenden Anlage erforderlich. In jedem Fall wird die Funktion der betreffenden Echtzeitanwendung erheblich beeinflusst.

Für herkömmliche, nicht-echtzeitfähige Geräte in eingebetteten Systemen (englisch Embedded Devices in einem Embedded System) ist ein so genanntes Switching von einem auf ein anderes Image der Echtzeitanwendung oder von einem auf einen anderen Speicherbereich bekannt, wobei das betreffende Feldgerät bei einer Aktualisierung durch einen derartigen Imageaustausch in der Regel neu gebootet werden muss.

Im Office-Umfeld eingesetzte herkömmliche Betriebssysteme, wie beispielsweise Windows oder Linux, ermöglichen es, bestimmte Betriebssystem-Aktualisierungen oder Aktualisierungen von Virensignaturen im laufenden Betrieb vorzunehmen und das System ohne Neustart weiter zu benutzen. Dabei handelt es sich jedoch nicht um sicherheitskritische Echtzeitanwendungen, wie es bei Feldgeräten häufig der Fall ist.

Für eine Aktualisierung von Schlüsselmaterial in Embedded Devices sind Mechanismen bekannt, bei denen parallel zwei Sätze von benötigten Schlüsseln vorgehalten werden, die mit einem Gültigkeitszeitraum versehen sind. Wenn ein Schlüsselsatz abgelaufen ist, wird auf einen zweiten Schlüsselsatz umgeschaltet. Der abgelaufene Schlüsselsatz wird ohne EchtzeitAnforderungen aktualisiert und steht beim Ablauf des aktuell gültigen Schlüsselsatzes zur Verfügung. Ein derartiges Verfahren ist zum Beispiel im BACnet-Protokoll (Building Automation Control Network Protocol)für die BACnet-Security standardisiert. BACnet wird von Geräten der Gebäudeautomatisierung oder des Gefahrenmanagements unterstützt.

Bei den herkömmlichen Systemen und Verfahren handelt es sich jedoch nicht um deterministische Verfahren zur Aktualisierung echtzeitfähiger Anwendungen.

Demnach ist eine Aufgabe der vorliegenden Erfindung, eine verbesserte Netzwerkeinrichtung und ein verbessertes Verfahren zum Betreiben einer Netzwerkeinrichtung für ein Automatisierungsnetzwerk mit Echtzeitanforderungen zu schaffen.

Demgemäß wird eine Netzwerkeinrichtung für ein Automatisierungsnetzwerk vorgeschlagen. Die Netzwerkeinrichtung ist mit Hilfe einer Echtzeitanwendung zur Bereitstellung einer Funktion der Netzwerkeinrichtung eingerichtet, wobei die Echtzeitanwendung mindestens einen vorbestimmten aktualisierbaren Parameter hat. Die Netzwerkeinrichtung weist eine Speichereinrichtung zum Speichern von Aktualisierungsdaten für den aktualisierbaren Parameter in einem Aktualisierungsspeicherbereich und zum Speichern von Anwendungsdaten für die Echtzeitanwendung in einem Anwendungsspeicherbereich auf, wobei der Aktualisierungsspeicherbereich und der Anwendungsspeicherbereich voneinander getrennt sind. Die Netzwerkeinrichtung ist derart eingerichtet, dass nach einem Schreiben von Aktualisierungsdaten in den Aktualisierungsspeicherbereich zu einem vorgegebenen Aktualisierungszeitpunkt ein Ändern einer auf den Anwendungsspeicherbereich verweisenden ersten Speicheradresse in eine auf den die Aktualisierungsdaten speichernden Aktualisierungsspeicherbereich verweisende zweite Speicheradresse erfolgt, wobei das Ändern innerhalb eines im Voraus festgelegten Aktualisierungszeitschlitzes deterministisch zur Laufzeit der Echtzeitanwendung erfolgt.

Das Netzwerkgerät kann insbesondere ein Feldgerät sein. Feldgeräte sind beispielsweise über einen Feldbus oder über eine Echtzeit-Ethernet-Verbindung mit einem Steuerungs- und Leitsystem verbunden. Im Steuerungs- und Leitsystem werden beispielsweise Daten ausgewertet, die vom Feldgerät erzeugt werden. Diese Daten dienen zur Regelung, Steuerung und weiteren Verarbeitung. An derartige Feldgeräte werden hohe Anforderungen hinsichtlich Effizienz, Robustheit und Verfügbarkeit gestellt.

Weiterhin wird ein Verfahren zum Betreiben einer Netzwerkeinrichtung für ein Automatisierungsnetzwerk vorgeschlagen. Die Netzwerkeinrichtung ist dabei mit Hilfe einer Echtzeitanwendung zur Bereitstellung einer Funktion der Netzwerkeinrichtung eingerichtet und hat mindestens einen vorbestimmten aktualisierbaren Parameter. Das Verfahren umfasst ein Speichern von Aktualisierungsdaten für den aktualisierbaren Parameter in einem Aktualisierungsspeicherbereich und ein Speichern von Anwendungsdaten für die Echtzeitanwendung in einem Anwendungsspeicherbereich, wobei der Aktualisierungsspeicherbereich und der Anwendungsspeicherbereich voneinander getrennt sind. Das Verfahren weist weiterhin auf: ein Schreiben von Aktualisierungsdaten für den aktualisierbaren Parameter in den Aktualisierungsspeicherbereich; und ein Ändern einer auf den Anwendungsspeicherbereich verweisenden ersten Speicheradresse in eine auf den die Aktualisierungsdaten speichernden Aktualisierungsspeicherbereich verweisende zweite Speicheradresse nach dem Speichern der Aktualisierungsdaten in den Aktualisierungsspeicherbereich zu einem vorgegebenen Aktualisierungszeitpunkt, wobei das Ändern innerhalb eines im Voraus festgelegten Aktualisierungszeitschlitzes deterministisch zur Laufzeit der Echtzeitanwendung erfolgt.

Die vorgeschlagene Netzwerkeinrichtung und das vorgeschlagene Verfahren ermöglichen es, einen aktualisierbaren Parameter einer Echtzeitanwendung in einer Netzwerkeinrichtung, wie beispielsweise einem Feldgerät zur Laufzeit zu aktualisieren, also während die Echtzeitanwendung ausgeführt wird, ohne die Echtzeitanwendung zu unterbrechen oder zu beenden. So sind beispielsweise Konfigurationsänderungen der Netzwerkeinrichtung und ihrer Echtzeitanwendung durch ein Einspielen von Betriebssystem-Patches, Signaturlisten von Virenpattern oder durch ein Aktualisieren kryptografischer Schlüssel oder abgelaufener Zertifikate, Angriffssignaturen oder Regelbasen von Firewalls und Intrusion Detection Systems (IDS) als Aktualisierungsdaten in einem Feldgerät möglich, ohne das Feldgerät herunterzufahren und neu zu starten beziehungsweise ohne die auf dem Feldgerät ausgeführte Echtzeitanwendung zu beenden und neu zu starten.

Der aktualisierbare Parameter ist vorbestimmt. Beispielsweise kann der aktualisierbare Parameter im Voraus geplante und festgelegte Variablen der Echtzeitanwendung umfassen, für die ein Update zur Laufzeit der Echtzeitanwendung möglich sein soll. Die festgelegten Variablen sind beispielsweise für die oben aufgezählten Konfigurationsänderungen und Aktualisierungen vorgesehen.

Die Echtzeitfähigkeit der Netzwerkeinrichtung und/oder des Verfahrens beziehungsweise die Eignung des Verfahrens für eine Aktualisierung einer Echtzeitanwendung zur Laufzeit ergibt sich weiterhin dadurch, dass das Ändern in im Voraus festgelegten, fest eingeplanten und bezüglich des Laufzeit-Aufwandes einer die Aktualisierung ausführenden Aktualisierungs- oder Update-Anwendung exakt angepassten Aktualisierungszeittakten vorgenommen wird. Deterministisch bedeutet dabei insbesondere, dass die notwendigen Schritte für eine Aktualisierung des aktualisierbaren Parameters vollständig spezifiziert und bezüglich ihrer Laufzeit analysiert sind, so dass schon in der Planungsphase der Echtzeitanwendung eine geeignete Dimension der Aktualisierungszeittakte als Bestandteil der gesamten Planung des Zykluszeit gewählt werden kann. Die Aktualisierungszeittakte werden innerhalb der Zykluszeit des echtzeitfähigen Gerätes eingeplant. Eine geeignete Analyse stellt beispielsweise eine Analyse der maximalen Laufzeit oder Ausführungszeit (Englisch Worst Case Execution Time, WCET) der betreffenden Aktualisierungsanwendung dar.

Der Aktualisierungsspeicherbereich und der Anwendungsspeicherbereich sind voneinander getrennt. Das heißt beispielsweise, dass jedem der beiden Speicherbereiche ein eigener Adressraum oder Adressbereich mit ausschließlich für diesen Speicherbereich reservierten Speicheradressen zugewiesen ist. Weiterhin ist vorzugsweise sichergestellt, dass die Echtzeitanwendung ausschließlich Zugriff auf den Anwendungsspeicherbereich hat. Im Gegenzug ist zum Beispiel ein Zugriff auf den Aktualisierungsspeicherbereich nur für die Update-Anwendung möglich. Der Zugriff für die Echtzeitanwendung und für die Update-Anwendung wird durch die Speicheradressen ermöglicht, die auf den Aktualisierungsspeicher beziehungsweise auf den Anwendungsspeicher verweisen.

In weiteren Ausführungsformen der Netzwerkeinrichtung und/oder des Verfahrens sind zur Laufzeit der Echtzeitanwendung eine erste Instanz des aktualisierbaren Parameters in dem Anwendungsspeicherbereich und eine zweite Instanz des aktualisierbaren Parameters in dem Aktualisierungsspeicherbereich gespeichert.

Dies ermöglicht es einer nicht notwendigerweise echtzeitfähigen Aktualisierungs- oder Update-Anwendung, Aktualisierungen oder Änderungen an der zweiten Instanz des aktualisierbaren Parameters vorzunehmen, während die Echtzeitanwendung nicht beeinträchtigt wird und weiterhin auf die erste Instanz des aktualisierbaren Parameters zugreift. Erst wenn die Update-Anwendung das Ändern des aktualisierbaren Parameters beendet hat, erhält die Echtzeitanwendung Zugriff auf die zweite Instanz des aktualisierbaren Parameters, anstelle weiterhin auf die erste, nun nicht mehr aktuelle Instanz des aktualisierbaren Parameters zuzugreifen. Damit wird eine echtzeitfähige, effiziente Aktualisierung der Echtzeitanwendung beziehungsweise des aktualisierbaren Parameters in der Netzwerkeinrichtung ermöglicht.

In weiteren Ausführungsformen der Netzwerkeinrichtung und/oder des Verfahrens umfasst die Netzwerkeinrichtung eine Speicheradressen-Tabelle zum Speichern der ersten Speicheradresse und der zweiten Speicheradresse.

Die Speicheradressen-Tabelle ermöglicht eine effiziente Verwaltung und einen effizienten Zugriff auf den Anwendungsspeicher und den Aktualisierungsspeicher.

In weiteren Ausführungsformen der Netzwerkeinrichtung und/oder des Verfahrens ist die Netzwerkeinrichtung derart eingerichtet, dass nach dem Schreiben der Aktualisierungsdaten in den Aktualisierungsspeicherbereich eine Zustandsinformation für einen Zustand des Aktualisierungsspeicherbereichs geändert wird, und dass das Ändern der ersten Speicheradresse in die zweite Speicheradresse in Abhängigkeit von der Zustandsinformation erfolgt.

Die Zustandsinformation kann vorteilhaft genutzt werden, das Ändern der ersten Speicheradresse in die zweite Speicheradresse derart zu synchronisieren, dass die Update-Anwendung zunächst alle Aktualisierungen des aktualisierbaren Parameters beendet, bevor das Ändern der Speicheradressen vorgenommen wird. Somit wird verhindert, dass ein Ändern der Speicheradressen vorgenommen wird, bevor die Aktualisierung abgeschlossen ist. Die Zustandsinformation dient somit als Signalisierung oder Flag, um anzuzeigen, dass die Aktualisierung abgeschlossen ist.

In weiteren Ausführungsformen der Netzwerkeinrichtung und/oder des Verfahrens umfasst die Netzwerkeinrichtung ein Zugriffsschutzmittel, welches zum Schützen eines Zugriffs auf die Zustandsinformation eingerichtet ist.

Das Schützen von Zugriffen auf geteilte Speicherbereiche ermöglicht es, sicherzustellen, dass beispielsweise für den Fall mehrerer gleichzeitig laufender Update-Anwendungen zwei oder mehrere Schreibzugriffe auf die Zustandsinformation zur selben Zeit vorgenommen werden können.

In weiteren Ausführungsformen der Netzwerkeinrichtung und/oder des Verfahrens umfasst das Zugriffsschutzmittel einen oder mehrere Semaphore.

Semaphore sind besonders geeignet zur Verwaltung des Zugriffs auf geteilte Ressourcen.

In weiteren Ausführungsformen der Netzwerkeinrichtung und/oder des Verfahrens umfasst die Speichereinrichtung mindestens einen weiteren Aktualisierungsspeicherbereich zum Speichern von Aktualisierungsdaten für den aktualisierbaren Parameter und mindestens einen weiteren Anwendungsspeicherbereich zum Speichern von Anwendungsdaten für die Echtzeitanwendung. Der mindestens eine weitere Aktualisierungsspeicherbereich und der mindestens eine weitere Anwendungsspeicherbereich sind dabei voneinander getrennt. Die Netzwerkeinrichtung ist derart eingerichtet, dass nach einem Schreiben von Aktualisierungsdaten in den mindestens einen weiteren Aktualisierungsspeicherbereich zu dem vorgegebenen Aktualisierungszeitpunkt ein Ändern einer auf den mindestens einen weiteren Anwendungsspeicherbereich verweisenden mindestens einen weiteren ersten Speicheradresse in eine auf den die Aktualisierungsdaten speichernden mindestens einen weiteren Aktualisierungsspeicherbereich verweisende mindestens eine weitere zweite Speicheradresse erfolgt, wobei das Ändern innerhalb eines im Voraus festgelegten Aktualisierungszeitschlitzes deterministisch zur Laufzeit der Echtzeitanwendung erfolgt.

Auf diese Weise können unterschiedliche Speicherbereiche verwaltet und/oder für eine Aktualisierung des aktualisierbaren Parameters berücksichtigt werden. Auch eine vorgebbare Reihenfolge von Aktualisierungen der verschiedenen Speicherbereiche sowie Abhängigkeiten unterschiedlicher Speicherbereiche und/oder einzelner Teilaktualisierungen sind somit möglich. Insbesondere ist es möglich, bestimmte Teilaktualisierungen nicht auszuführen, solange oder wenn andere Teilaktualisierungen in anderen Speicherbereichen nicht erfolgt sind oder noch ausstehen.

Diese Abhängigkeiten können schon bei der Erstellung des Speicher-Images der Echtzeitanwendung statisch festgelegt werden. Sie können alternativ auch dynamisch zur Laufzeit bestimmt werden, indem zum Beispiel ein Speicherbereich logische Abhängigkeiten zu anderen Speicherbereichen beschreibt. Dabei wird beispielsweise bei der Programmierung und Image-Erstellung der Echtzeitanwendung festgelegt, ob ein Parameter aktualisierbar ist und ob eine bestimmte Aktualisierungs-Reihenfolge einzuhalten ist.

In weiteren Ausführungsformen der Netzwerkeinrichtung und/oder des Verfahrens ist die Netzwerkeinrichtung derart eingerichtet, dass nach dem Schreiben der Aktualisierungsdaten in den mindestens einen weiteren Aktualisierungsspeicherbereich mindestens eine weitere Zustandsinformation für einen Zustand des mindestens einen weiteren Aktualisierungsspeicherbereichs geändert wird, und dass das Ändern der mindestens einen weiteren ersten Speicheradresse in die mindestens eine weitere zweite Speicheradresse in Abhängigkeit von der mindestens einen weiteren Zustandsinformation erfolgt.

Dies ermöglicht eine entsprechende Synchronisierung des Änderns der Speicheradressen auch für den Fall von mehreren Aktualisierungen in mehreren Speicherbereichen.

In weiteren Ausführungsformen der Netzwerkeinrichtung und/oder des Verfahrens ist das Speichern der Aktualisierungsdaten in Abhängigkeit von einer vorgegebenen Gültigkeit des aktualisierbaren Parameters ausführbar.

So können beispielsweise kryptographische Schlüssel mit einer Gültigkeit versehen werden. Ein Update der kryptographischen Schlüssel ist dann nur nach Ablauf einer entsprechenden Gültigkeit möglich. Dies kann beispielsweise als Zugriffsschutz oder als Auslöser (englisch Trigger) für eine Aktualisierung des aktualisierbaren Parameters, in diesem Fall also der kryptographischen Schlüssel, verstanden werden.

In weiteren Ausführungsformen der Netzwerkeinrichtung und/oder des Verfahrens umfasst der aktualisierbare Parameter kryptographische Schlüssel und/oder Zertifikate.

Sowohl kryptographische Schlüssel als auch Zertifikate müssen regelmäßig erneuert werden, um ihre Schutzfunktion nicht einzubüßen. Dies wird durch das vorgeschlagene Verfahren ermöglicht.

In weiteren Ausführungsformen der Netzwerkeinrichtung und/oder des Verfahrens umfasst der aktualisierbare Parameter Angriffssignaturen und/oder Regelbasen für eine Firewall und/oder ein Intrusion Detection System.

Angriffssignaturen und Regelbasen müssen ständig aktuell gehalten werden, um das Feldgerät vor Angriffen vor außen zu schützen. Dies wird durch das vorgeschlagene Verfahren ermöglicht.

Weiterhin wird ein Automatisierungsnetzwerk mit mehreren entsprechenden Netzwerkeinrichtungen vorgeschlagen. Das Automatisierungsnetzwerk ist eingerichtet, zur Laufzeit eine synchronisierte und/oder gleichzeitige Aktualisierung des aktualisierbaren Parameters jeder der Netzwerkeinrichtungen vorzunehmen.

Auf diese Weise ist eine effiziente Aktualisierung mehrerer Netzwerkeinrichtungen möglich. Dies trägt zur Erhöhung der Sicherheit des Betriebs und der Effizienz der Wartung des Automatisierungsnetzwerkes bei.

Weiterhin wird ein Computerprogrammprodukt vorgeschlagen, welches auf einer programmgesteuerten Einrichtung die Durchführung eines entsprechenden Verfahrens veranlasst.

Ein Computerprogramm-Produkt wie ein Computerprogramm-Mittel kann beispielsweise als Speichermedium, wie Speicherkarte, USB-Stick, CD-ROM, DVD oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogramm-Produkt oder dem Computerprogramm-Mittel erfolgen. Als programmgesteuerte Einrichtung kommt insbesondere eine wie vorbeschriebene Netzwerkeinrichtung in frage.

Weiterhin wird ein Datenträger mit einem gespeicherten Computerprogramm mit Befehlen vorgeschlagen, welche die Durchführung eines entsprechenden Verfahrens auf einer programmgesteuerten Einrichtung veranlasst.

Weitere mögliche Implementierungen der Erfindung umfassen auch nicht explizit genannte Kombinationen von zuvor oder im Folgenden bezüglich der Ausführungsbeispiele beschriebenen Verfahrensschritte, Merkmale oder Ausführungsformen des Verfahrens oder der Netzwerkeinrichtung. Dabei wird der Fachmann auch Einzelaspekte als Verbesserungen oder Ergänzungen zu der jeweiligen Grundform der Erfindung hinzufügen oder abändern.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden.

Dabei zeigen:
- Fig. 1: ein Blockschaltbild eines Ausführungsbeispiels einer Netzwerkeinrichtung;
- Fig. 2: ein Blockschaltbild eines Ausschnitts des Ausführungsbeispiels der Netzwerkeinrichtung aus Fig. 1;
- Fig. 3: ein Blockschaltbild eines Automatisierungsnetzwerkes mit mehreren Netzwerkeinrichtungen;
- Fig. 4: ein Ablaufdiagramm eines Ausführungsbeispiels eines Verfahrens zum Betreiben einer Netzwerkeinrichtung für ein Automatisierungsnetzwerk;
- Fig. 5: ein alternatives Blockschaltbild des Ausschnitts des Ausführungsbeispiels der Netzwerkeinrichtung aus Fig. 1;
- Fig. 6: ein alternatives Blockschaltbild des Ausschnitts des Ausführungsbeispiels der Netzwerkeinrichtung aus Fig. 1; und
- Fig. 7: ein alternatives Blockschaltbild des Ausschnitts des Ausführungsbeispiels der Netzwerkeinrichtung aus Fig. 1.

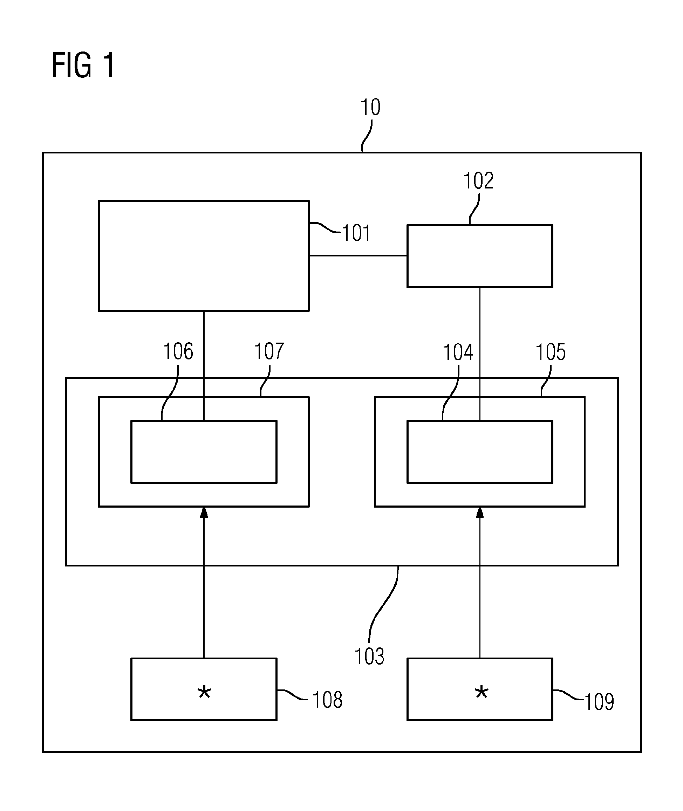

In Fig. 1 ist ein Blockschaltbild eines Ausführungsbeispiels einer Netzwerkeinrichtung 10 dargestellt.

Die Netzwerkeinrichtung 10, die für den Betrieb in einem Automatisierungsnetzwerk geeignet ist, ist mit Hilfe einer Echtzeitanwendung 101 zur Bereitstellung einer Funktion der Netzwerkeinrichtung 10 eingerichtet, wie beispielsweise der Steuerung und Kontrolle einer Maschine oder einer maschinellen Vorrichtung. Die Echtzeitanwendung 101 hat mindestens einen vorbestimmten aktualisierbaren Parameter 102, der durch das Verfahren zur Laufzeit der Echtzeitanwendung 101 und damit insbesondere ohne Shutdown, das heißt ohne Beenden der Echtzeitanwendung 101 und/oder Herunterfahren der Netzwerkeinrichtung 10 teilweise oder vollständig aktualisiert werden kann.

Wie in Fig. 1 dargestellt, weist die Netzwerkeinrichtung 10 mehrere Komponenten auf. Eine Speichereinrichtung 103 dient zum Speichern von Aktualisierungsdaten 104 für den aktualisierbaren Parameter 102 in einem Aktualisierungsspeicherbereich 105 und zum Speichern von Anwendungsdaten 106 für die Echtzeitanwendung 101 in einem Anwendungsspeicherbereich 107.

Beispiele für Anwendungsdaten 105 sind Programmcode für ein Betriebssystem, Signaturlisten von Virenpattern, kryptographische Schlüssel, Zertifikate, Angriffssignaturen oder Regelbasen von Firewalls und Intrusion Detection Systems (IDS).

Beispiele für Aktualisierungsdaten 104 sind dementsprechend Betriebssystem-Patches, Signaturlisten von Virenpattern, kryptographische Schlüssel, Zertifikate, Angriffssignaturen oder Regelbasen von Firewalls und IDS.

Der Aktualisierungsspeicherbereich 105 und der Anwendungsspeicherbereich 107 sind dabei voneinander getrennt, stellen also jeweils eigene Adressräume oder Adressbereiche dar, wobei eine Adressierung der beiden Speicherbereiche 105, 107 durch eine auf den Anwendungsspeicherbereich 107 verweisenden erste Speicheradresse 108 und eine zweite auf den die Aktualisierungsdaten 104 speichernden Aktualisierungsspeicherbereich 105 verweisende zweite Speicheradresse 109 erfolgt.

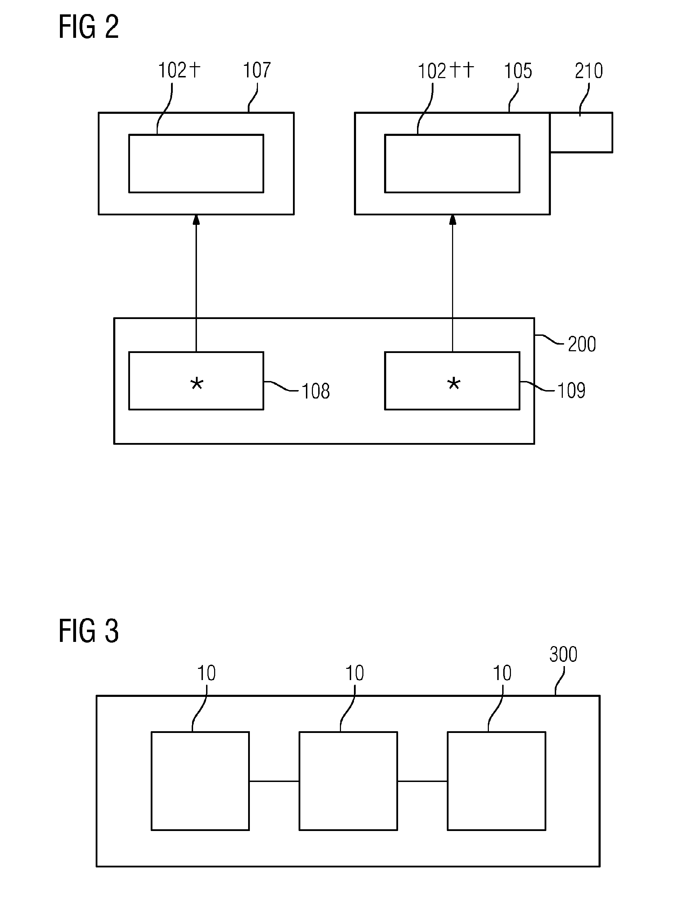

Fig. 2 zeigt ein Blockschaltbild eines Ausschnitts des Ausführungsbeispiels der Netzwerkeinrichtung 10 aus Fig. 1. Zur besseren Lesbarkeit sind in Fig. 2 nur der Aktualisierungsspeicherbereich 105 und der Anwendungsspeicherbereich 107 sowie die auf die beiden Bereiche verweisenden Speicheradressen 108, 109 dargestellt. Bei den beiden Speicheradressen 108, 109 handelt es sich programmtechnisch um Pointer auf die Speicheradressen der beiden Speicherbereiche in der Speichereinrichtung 103 der Netzwerkeinrichtung 10.

Zur Laufzeit der Echtzeitanwendung 101 werden eine erste Instanz 102t des aktualisierbaren Parameters 102 in dem Anwendungsspeicherbereich 107 und eine zweite Instanz 102tt des aktualisierbaren Parameters 102 in dem Aktualisierungsspeicherbereich 105 gespeichert.

Die beiden Speicheradressen 108, 109 sind in einer Speicheradressen-Tabelle 200 gespeichert.

Die im Voraus geplanten und festgelegten Variablen des aktualisierbaren Parameters 102, die aktualisiert werden sollen, sind somit zur Laufzeit doppelt als erste Instanz 102t und zweite Instanz 102tt in der Speichereinrichtung 103 angelegt und jeweils eindeutig durch die in der Speichertabelle 200 gespeicherten Speicheradressen 108, 109 adressiert.

Ein Tabelleneintrag in der Speicheradressen-Tabelle 200 umfasst somit zwei Speicheradressen, wobei die erste Speicheradresse 108 auf den Anwendungsspeicherbereich 107 verweist oder zeigt, auf den die Echtzeitanwendung 101 Zugriff hat, und wobei die zweite Speicheradresse 109 auf den Aktualisierungsspeicherbereich 105 verweist oder zeigt, auf den eine nicht notwendigerweise echtzeitfähige Update-Anwendung zur Aktualisierung des aktualisierbaren Parameters 102 zugreifen kann.

Der den Anwendungsspeicherbereich 107 und den Aktualisierungsspeicherbereich 105 aufweisende Speicher bildet somit einen von echtzeitfähigen und nicht notwendigerweise echtzeitfähigen Komponenten oder Anwendungen genutzten Speicherbereich für Konfigurationsdaten, der auch als Updatespeicher bezeichnet werden kann.

Der programmtechnische Zugriff der Echtzeitanwendung 101 geschieht mittels des in Fig. 2 dargestellten Speichertabellen-Eintrags, der wiederum auf die erste Instanz 102t des aktualisierbaren Parameters 102 verweist.

Eine Update-Anwendung zur Durchführung der Aktualisierung des aktualisierbaren Parameters 102 schreibt Aktualisierungsdaten 104 in den Aktualisierungsspeicherbereich 105. Programmtechnisch geschieht dies durch Modifikation der betreffenden zu aktualisierenden Variablen der zweiten Instanz 102tt des aktualisierbaren Parameters 102.

In Fig. 2 ist weiterhin eine Zustandsinformation 210 zur Kennzeichnung eines Zustands des Aktualisierungsspeicherbereichs 105 dargestellt. Diese Zustandsinformation 210 wird nach dem Schreiben der Aktualisierungsdaten 104 in den Aktualisierungsspeicherbereich 105 von der Update-Anwendung geändert. Alternativ kann die Update-Anwendung das Beenden des Schreibens der Aktualisierungsdaten 104 auch geeignet signalisieren oder durch Auslösen eines bestimmten Ereignisses kenntlich machen. Der Zugriff auf die Zustandsinformation 210 ist dabei beispielsweise durch Semaphore geschützt.

Eine so genannte Switching-Komponente kann daraufhin das Ändern der ersten Speicheradresse 108 in die zweite Speicheradresse 109 in Abhängigkeit von der Zustandsinformation 210 vornehmen. Diese Switching-Komponente kann beispielsweise als Teil der Echtzeitanwendung implementiert sein. Alternativ kann die Switching-Komponente der Echtzeitanwendung als auf der Plattform fest verdrahtete Funktion zur Verfügung gestellt werden. Die Switching-Komponente führt für den vorbestimmten aktualisierbaren Parameter 102 den abschließenden Schritt des vorgeschlagenen Verfahrens aus.

Es ist möglich, dass ein Anwendungsspeicherbereich 107 im Verlauf des Verfahrens nach dem Vertauschen der Speicheradressen 108 und 109 die Rolle des Aktualisierungsspeicherbereichs 105 übernimmt und umgekehrt.

Die Switching-Komponente kann deterministisch genutzt werden, indem schon während der Planung der Echtzeitanwendung 101 innerhalb jedes Zyklus die Ausführungszeit der Switching-Komponente zur gesamten Zykluszeit hinzugefügt wird, so dass die gesamte Zykluszeit entsprechend erhöht wird.

Der Zugriff auf die Zustandsinformation 210 ist beispielsweise durch Semaphore geschützt, da eine Synchronisation der Zustandsinformation 210, auf die sowohl die Switching-Komponente als auch die Update-Anwendung zugreifen, sichergestellt sein muss. Insbesondere muss der Zugriff auf die Zustandsinformation 210 für die Switching-Komponente gesperrt sein, wenn die Update-Anwendung schreibend auf die Zustandsinformation 210 zugreift.

Die Speicheradressen-Tabelle 200 kann weitere Einträge enthalten, die auf weitere als Update-Speicher dienende Speicherbereiche bestehend aus jeweils einem weiteren Aktualisierungsspeicherbereich und einem weiteren Anwendungsspeicherbereich verweisen. Für jeden dieser weiteren Update-Speicher wird eine entsprechende weitere Zustandsinformation vorgehalten, die entsprechend der oben dargestellten Vorgehensweise verwaltet wird.

Die Speicheradressen-Tabelle 200 dient damit einer gesteuerten Abarbeitung eines oder mehrerer Update-Speicher zur Aktualisierung des aktualisierbaren Parameters 102. Der aktualisierbare Parameter 102 kann wie oben erwähnt mehrere zu aktualisierende Variablen beinhalten, wobei jeder Eintrag der Speicheradressen-Tabelle auf eine oder mehrere dieser zu aktualisierenden Variablen des aktualisierbaren Parameters 102 verweist.

Fig.3 zeigt ein Blockschaltbild eines Automatisierungsnetzwerkes 300 mit mehreren Netzwerkeinrichtungen 10. Die Netzwerkeinrichtungen 10 sind über Netzwerkverbindungen verbunden. Das Automatisierungsnetz 300 kann dabei weitere Komponenten wie beispielsweise Kontrollvorrichtungen enthalten, die in der Fig. 3 nicht dargestellt sind.

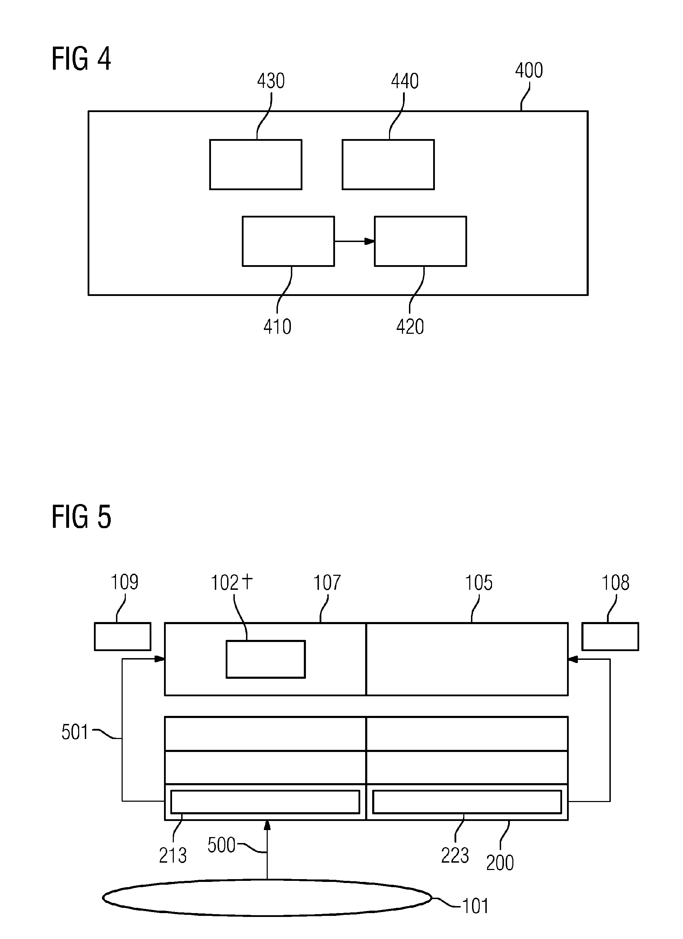

Fig. 4 zeigt ein Ablaufdiagramm eines Ausführungsbeispiels eines Verfahrens 400 zum Betreiben einer Netzwerkeinrichtung 10 für ein Automatisierungsnetzwerk 300.

Das Verfahren 400 umfasst das Schreiben 410 von Aktualisierungsdaten 104 für den aktualisierbaren Parameter 102 in einen Aktualisierungsspeicherbereich 105 zu einem vorgegebenen Aktualisierungszeitpunkt und das Ändern 420 einer auf den Anwendungsspeicherbereich 107 verweisenden ersten Speicheradresse 108 in eine auf den die Aktualisierungsdaten 104 beinhaltende Aktualisierungsspeicherbereich 105 verweisende zweite Speicheradresse 109, wobei das Ändern 420 nach dem Schreiben 410 vorgenommen wird.

Die Fig. 5-7 zeigen jeweils ein alternatives Blockschaltbild des Ausschnitts des Ausführungsbeispiels der Netzwerkeinrichtung aus Fig. 1.

Die im Voraus geplanten und festgelegten Variablen des aktualisierbaren Parameters 102 sind in Fig. 5-7 ein drittes Objekt "Object 3". Das dritte Objekt soll aktualisiert werden und ist somit zur Laufzeit doppelt als erste Instanz 102t ("Object 3") und zweite Instanz 102tt ("Object 3 - updated") in der Speichereinrichtung 103 angelegt und jeweils eindeutig durch die in der Speichertabelle 200 gespeicherten Speicheradressen 108 ("Adr y"), 109 ("Adr x") adressiert.

Jeder Tabelleneintrag in der Speicheradressen-Tabelle 200 umfasst zwei Speicherbereichsadressen: Die eine Speicherbereichsadresse 109 zeigt auf einen Speicherbereich, auf den eine Echtzeitanwendung 101 Zugriff haben soll. Die andere Speicherbereichsadresse 108 zeigt auf einen Speicherbereich, auf den eine nicht notwendigerweise echtzeitfähige Updateanwendung zugreifen darf. Der Speicheradressen-Tabelleneintrag für das dritte Objekt umfasst beispielsweise einen zur Speicherbereichsadresse 109 gehörigen Tabelleneintrag 213 ("Adr of active Object 3: x") und einen zur Speicherbereichsadresse 108 gehörigen Tabelleneintrag 223 ("Adr of inactive Object 3: y"). Damit entsteht ein gemeinsam von echtzeitfähigen und nicht echtzeitfähigen Komponenten genutzter Speicherbereich für Konfigurationsdaten, der Updatespeicher.

Wie in Fig. 5 dargestellt, greift die Echtzeitanwendung 101 ("RT application using RT Object 3") mittels eines zur Speicherbereichsadresse 109 gehörigen Tabelleneintrags 213 ("Adr of active Object 3: x") über eine zusätzliche Indirektion auf das dritte Objekt ("Object 3") zu. Dabei wird der zur Speicherbereichsadresse 109 gehörige Tabelleneintrag 213 gelesen 500 ("read") und der Anwendungsspeicherbereich 107 gelesen 501 ("read") und in diesen geschrieben 501 ("write").

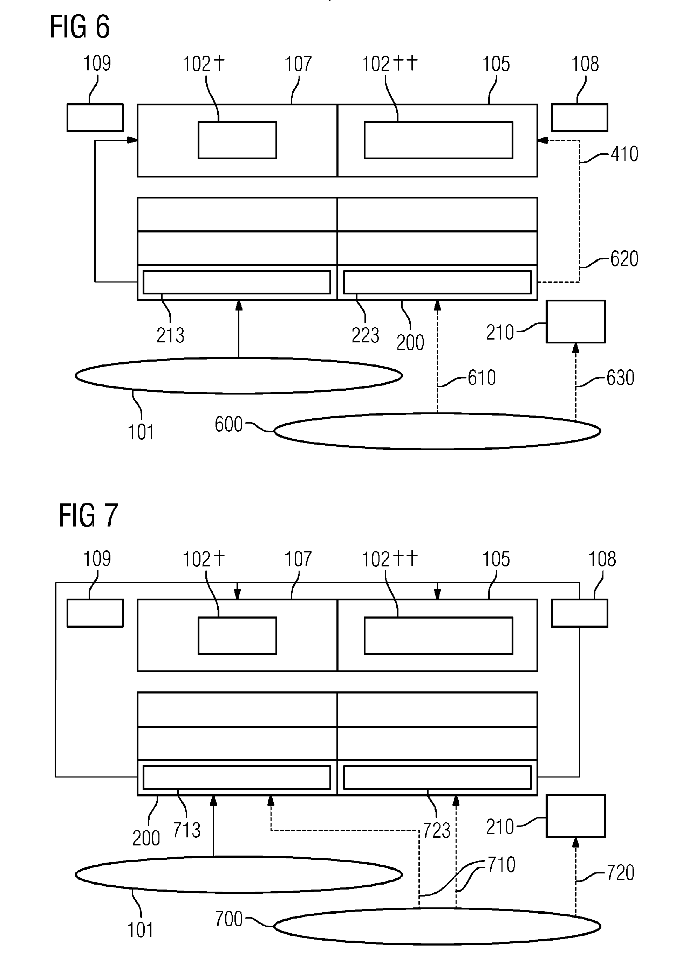

Wie in Fig. 6 dargestellt, führt eine beliebige Anwendung 600 ("Update application for RT Object 3"), die ein Update durchführen will, das Lesen 610 ("read") des zur Speicherbereichsadresse 108 gehörigen Tabelleneintrags 223 durch, schreibt die geänderten Daten in den Update-Speicherbereich 105 , führt eine Änderung 630 ("write") einer Zustandsinformation 210 durch und sendet der Switching-Komponente die Zustandinformation 210, beispielsweise mittels eines Finished Flags 620, oder löst ein Ereignis aus, wenn das Schreiben 410 in den Update-Speicherbereich 105 abgeschlossen ist.

Wie in Fig. 7 dargestellt, führt eine echtzeitfähige Switching-Komponente 700 ausgelöst durch die Zustandsinformation 210, die eine Information über ein abgeschlossenes Update enthält und die gelesen und anschließend gelöscht wird 720 ("read then delete"), zum Beispiel für den updatefähigen, das dritte Objekt beinhaltenden Speicherbereich, einen Tausch 710 ("Switching Process", "exchange") der Objektadressen 108, 109 innerhalb eines Adresspaares durch, so dass ein zur Speicherbereichsadresse 108 gehöriger Tabelleneintrag 713 entsteht ("Adr of active Object 3: y"), sowie ein zur Speicherbereichsadresse 109 gehörigen Tabelleneintrag 723 ("Adr of inactive Object 3: x").

Die Synchronisation der Zustandinformation 210 (Finished Flag), auf die sowohl die Switching-Komponente als auch die Update-Anwendung zugreifen, muss über Funktionen der Ausführungsumgebung wie zum Beispiel Semaphore sichergestellt sein. Das heißt, während die Update-Komponente schreibend auf das Flag zugreift, muss der Zugriff für die Switching-Komponente gesperrt sein.

Für das vorgeschlagene Verfahren und/oder die vorgeschlagene Netzwerkeinrichtung sind weiterhin folgende Szenarien denkbar.

Das Hinzufügen von zusätzlichen Feldgeräten, zum Beispiel umfassend Funktionen zum Energiemonitoring oder Überwachungssensoren, in ein laufendes Automatisierungsnetzwerk kann mittels einer Aktualisierung oder Konfigurationsänderung gemäß dem vorgeschlagenen Verfahren erfolgen, wenn der Einsatz eines solchen zusätzlichen Feldgerätes bereits in der Planung als möglich vorgesehen ist und von einem Konfigurationsparameter abhängig gemacht wurde, der in dem Update-Speicher gespeichert wird.

Speziell können Überwachungs-Prozesse den Einbau solcher zusätzlichen, vorgeplanten Feldgeräte in das Automatisierungsnetzwerk erfassen und authentisieren und das Schreiben der Aktualisierungsdaten in den Update-Speicher vornehmen.

Zudem können Systemvariablen von Echtzeitanwendungen, für die es erforderlich ist, dass sie im laufenden Betrieb aktualisiert werden, während des Engineerings als solche explizit gekennzeichnet werden. Ein Beispiel ist ein Virenscanner für industrielle Kommunikationsprotokolle, der mit einer Liste von Angriffssignaturen aktualisiert werden soll. Als zu aktualisierender Parameter werden dann zum Beispiel aktuelle Virendaten und/oder Signaturen aktualisiert. Dabei kann ein speziell für Industrieanwendungen mit begrenztem Speicherplatz entwickelter Alterungs- und Ersetzungsalgorithmus eingesetzt werden.

Für eine automatisierte Erneuerung von in der Netzwerkeinrichtung vorgehaltenen kryptographischen Schlüsseln können Zertifikats- bzw. Schlüsselspeicher speziell als solche gekennzeichnet werden und damit der Prozess zur Zertifikatserneuerung in das Image der Echtzeitanwendung integriert werden. Als zu aktualisierender Parameter werden dann zum Beispiel aktuelle kryptographische Schlüssel und/oder Zertifikate aktualisiert.

Speziell für das Bootstrapping von Credentials kann ein Überwachungs- und Updatemechanismus vorhanden sein, der den Ablauf von gespeicherten Zertifikaten prüft und in einem definierten Zeitraum eine Zertifikatserneuerung anstößt. Dies kann dadurch erfolgen, dass die Steuerung, beispielsweise mittels eines Cryptochips oder softwarebasiert, ein neues asymmetrisches Schlüsselpaar erzeugt und dann zunächst über asynchrone Verbindungen einen PKCS#10-Zertifikat Signing Request an eine Certification Authority sendet. Erhält die Steuerung das Zertifikat über den öffentlichen Schlüssel zurück, so wird sie die benötigten privaten/öffentlichen Schlüssel als zu aktualisierender Parameter in den updatefähigen Speicher für Echtzeitanwendungen schreiben und mittels eines Switch-Vorganges ersetzen. Die Zertifizierungsstelle kann die Zertifikatsveröffentlichung übernehmen.

Das vorgeschlagene Verfahren und die Ausführungsbeispiele für Netzwerkeinrichtungen ermöglichen es somit, Konfigurationsänderungen von laufenden Echtzeitanwendungen vorzunehmen.

Insbesondere kann eine Aktualisierung von Security-Assoziationen wie zum Beispiel symmetrischer kryptografischer Schlüssel oder abgelaufener Zertifikate, Angriffssignaturen oder Regelbasen von Firewalls und IDS-Systemen erfolgen, ohne dass es einer Betriebsunterbrechung des betreffenden Feldgeräts bedarf. Erneuerte Schlüssel und/oder Zertifikate, aktualisierte Angriffssignaturen oder Regelbasen stellen aktualisierbare Parameter dar.

Weiterhin können Inkonsistenzen bei der Durchführung von Updates durch die Festlegung von Abhängigkeiten vermieden werden.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Netzwerkeinrichtung (10) für ein Automatisierungsnetzwerk (300), welche mit Hilfe einer Echtzeitanwendung (101) zur Bereitstellung einer Funktion der Netzwerkeinrichtung (10) eingerichtet ist, wobei die Echtzeitanwendung (101) mindestens einen vorbestimmten aktualisierbaren Parameter (102) hat und die Netzwerkeinrichtung (10) aufweist:
eine Speichereinrichtung (103) zum Speichern (410) von Aktualisierungsdaten (104) für den aktualisierbaren Parameter (102) in einem Aktualisierungsspeicherbereich (105) und zum Speichern von Anwendungsdaten (106) für die Echtzeitanwendung (101) in einem Anwendungsspeicherbereich (107), wobei der Aktualisierungsspeicherbereich (105) und der Anwendungsspeicherbereich (107) voneinander getrennt sind,
wobei die Netzwerkeinrichtung (10) derart eingerichtet ist, dass nach einem Schreiben (410) von Aktualisierungsdaten (104) in den Aktualisierungsspeicherbereich (105) zu einem vorgegebenen Aktualisierungszeitpunkt ein Ändern (420) einer auf den Anwendungsspeicherbereich (107) verweisenden ersten Speicheradresse (108) in eine auf den die Aktualisierungsdaten (104) speichernden Aktualisierungsspeicherbereich (105) verweisende zweite Speicheradresse (109) erfolgt, wobei das Ändern (420) innerhalb eines im Voraus festgelegten Aktualisierungszeitschlitzes deterministisch zur Laufzeit der Echtzeitanwendung (101) erfolgt.

2. Netzwerkeinrichtung (10) nach Anspruch 1,
**dadurch gekennzeichnet,**
**dass** zur Laufzeit der Echtzeitanwendung (101) eine erste Instanz (102t) des aktualisierbaren Parameters (101) in dem Anwendungsspeicherbereich (107) und eine zweite Instanz (102tt) des aktualisierbaren Parameters (102) in dem Aktualisierungsspeicherbereich (105) gespeichert sind.

3. Netzwerkeinrichtung (10) nach einem der vorstehenden Ansprüche,
ferner umfassend eine Speicheradressen-Tabelle (200) zum Speichern der ersten Speicheradresse (108) und der zweiten Speicheradresse (109).

4. Netzwerkeinrichtung (10) nach einem der vorstehenden Ansprüche,
die ferner derart eingerichtet ist, dass nach dem Schreiben (410) der Aktualisierungsdaten (104) in den Aktualisierungsspeicherbereich (105) eine Zustandsinformation (210) für einen Zustand des Aktualisierungsspeicherbereichs (105) geändert wird, und dass das Ändern (420) der ersten Speicheradresse (108) in die zweite Speicheradresse (109) in Abhängigkeit von der Zustandsinformation (210) erfolgt.

5. Netzwerkeinrichtung (10) nach Anspruch 4, ferner umfassend ein Zugriffsschutzmittel, welches zum Schützen eines Zugriffs auf die Zustandsinformation (210) eingerichtet ist.

6. Netzwerkeinrichtung (10) nach Anspruch 5,
**dadurch gekennzeichnet,**
**dass** das Zugriffsschutzmittel einen oder mehrere Semaphore umfasst.

7. Netzwerkeinrichtung (10) nach einem der vorstehenden Ansprüche,
wobei die Speichereinrichtung (103) mindestens einen weiteren Aktualisierungsspeicherbereich (105) zum Speichern (410) von Aktualisierungsdaten (104) für den aktualisierbaren Parameter (102) und mindestens einen weiteren Anwendungsspeicherbereich (107) zum Speichern von Anwendungsdaten (106) für die Echtzeitanwendung (101) umfasst, wobei der mindestens eine weitere Aktualisierungsspeicherbereich (105) und der mindestens eine weitere Anwendungsspeicherbereich (107) voneinander getrennt sind, und
wobei die Netzwerkeinrichtung (10) ferner derart eingerichtet ist, dass nach einem Schreiben (410) von Aktualisierungsdaten (104) in den mindestens einen weiteren Aktualisierungsspeicherbereich (105) zu dem vorgegebenen Aktualisierungszeitpunkt ein Ändern (420) einer auf den mindestens einen weiteren Anwendungsspeicherbereich (107) verweisenden mindestens einen weiteren ersten Speicheradresse (108) in eine auf den die Aktualisierungsdaten (104) speichernden mindestens einen weiteren Aktualisierungsspeicherbereich (105) verweisende mindestens eine weitere zweite Speicheradresse (109) erfolgt, wobei das Ändern (420) innerhalb eines im Voraus festgelegten Aktualisierungszeitschlitzes deterministisch zur Laufzeit der Echtzeitanwendung (101) erfolgt.

8. Netzwerkeinrichtung (10) nach Anspruch 7,
die ferner derart eingerichtet ist, dass nach dem Schreiben (410) der Aktualisierungsdaten (104) in den mindestens einen weiteren Aktualisierungsspeicherbereich (105) mindestens eine weitere Zustandsinformation (210) für einen Zustand des mindestens einen weiteren Aktualisierungsspeicherbereichs (105) geändert wird, und dass das Ändern (420) der mindestens einen weiteren ersten Speicheradresse (108) in die mindestens eine weitere zweite Speicheradresse (109) in Abhängigkeit von der mindestens einen weiteren Zustandsinformation (210) erfolgt.

9. Netzwerkeinrichtung (10) nach einem der vorstehenden Ansprüche, wobei das Schreiben (410) der Aktualisierungsdaten (104) in Abhängigkeit von einer vorgegebenen Gültigkeit des aktualisierbaren Parameters (102) ausführbar ist.

10. Netzwerkeinrichtung (10) nach einem der vorstehenden Ansprüche, wobei der aktualisierbare Parameter (102) kryptographische Schlüssel und/oder Zertifikate umfasst.

11. Netzwerkeinrichtung (10) nach einem der vorstehenden Ansprüche, wobei der aktualisierbare Parameter (102) Angriffssignaturen und/oder Regelbasen für eine Firewall und/oder ein Intrusion Detection System umfasst.

12. Automatisierungsnetzwerk (300) mit mehreren Netzwerkeinrichtungen (10) nach einem der Ansprüche 1-11, wobei das Automatisierungsnetzwerk (300) derart eingerichtet ist, zur Laufzeit eine synchronisierte und/oder gleichzeitige Aktualisierung des aktualisierbaren Parameters (102) jeder der Netzwerkeinrichtungen (10) vorzunehmen.

13. Verfahren (400) zum Betreiben einer Netzwerkeinrichtung (10) insbesondere nach einem der Ansprüche 1-11 für ein Automatisierungsnetzwerk (300), welche mit Hilfe einer Echtzeitanwendung (101) zur Bereitstellung einer Funktion der Netzwerkeinrichtung (10) eingerichtet ist, wobei die Echtzeitanwendung (101) mindestens einen vorbestimmten aktualisierbaren Parameter (102) hat, wobei das Verfahren (400) umfasst:
Speichern (430) von Aktualisierungsdaten (104) für den aktualisierbaren Parameter (102) in einem Aktualisierungsspeicherbereich (105);
Speichern (440) von Anwendungsdaten (106) für die Echtzeitanwendung (101) in einem Anwendungsspeicherbereich (107), wobei der Aktualisierungsspeicherbereich (105) und der Anwendungsspeicherbereich (107) voneinander getrennt sind;
Schreiben (410) von Aktualisierungsdaten (104) für den aktualisierbaren Parameter (102) in den Aktualisierungsspeicherbereich (105); und
zu einem vorgegebenen Aktualisierungszeitpunkt Ändern (420) einer auf den Anwendungsspeicherbereich (107) verweisenden ersten Speicheradresse (108) in eine auf den die Aktualisierungsdaten (104) speichernden Aktualisierungsspeicherbereich (105) verweisende zweite Speicheradresse (109) nach dem Schreiben (410) der Aktualisierungsdaten (104) in den Aktualisierungsspeicherbereich (105), wobei das Ändern (420) innerhalb eines im Voraus festgelegten Aktualisierungszeitschlitzes deterministisch zur Laufzeit der Echtzeitanwendung (101) erfolgt.

14. Computerprogrammprodukt, welches auf einer programmgesteuerten Einrichtung die Durchführung eines Verfahrens (400) nach Anspruch 13 veranlasst.

15. Datenträger mit einem gespeicherten Computerprogramm mit Befehlen, welche die Durchführung eines Verfahrens (400) nach Anspruch 13 auf einer programmgesteuerten Einrichtung veranlasst.
